# EUROPÄISCHE PATENTSCHRIFT

(11) **EP 0 903 539 B1**
(45) Veröffentlichungstag und Bekanntmachung des Hinweises auf die Patenterteilung: **14.05.2003**
(21) Anmeldenummer: 98115221.8
(22) Anmeldetag: 13.08.1998
(51) Int. Cl.: F23D 14/66, F23L 15/02, F23C 3/00

(54) **Regeneratorbrenner**
Regenerator burner
Brûleur avec régénérateur

(30) Priorität: 17.09.1997 DE 19740788
(43) Veröffentlichungstag der Anmeldung: 24.03.1999
(73) Patentinhaber: Wünning, Joachim, Dr.-Ing., D-71229 Leonberg (DE)
(72) Erfinder: Wünning, Joachim, Dr.-Ing., D-71229 Leonberg (DE)
(74) Vertreter: Patentanwälte Rüger, Barthelt & Abel

(56) Entgegenhaltungen:
- EP-A- 0 293 168
- EP-A- 0 685 683
- EP-A- 0 732 542
- DE-A- 4 420 477
- GB-A- 540 797
- US-A- 2 795 213

## Beschreibung

Die Erfindung betrifft einen Regeneratorbrenner, insbesondere zur Beheizung von Ofenräumen von Industrieöfen.

Unter Regeneratorbrennern sind Industriebrenner verstanden, die mit regenerativer Luftvorwärmung arbeiten und dazu in der Regel mit zwei integrierten Regeneratoren arbeiten, die abwechselnd mit heißen Verbrennungsabgasen und mit kalter Verbrennungsluft im Gegenstrombetrieb beaufschlagt werden. Solche Regeneratorbrenner erlauben es eine höhere Luftvorwärmung als sogenannte RekuperatorBrenner zu erzielen, d.h., Industriebrenner, die einen eingebauten Rekuperator aufweisen. Die bei Regeneratorbrennern erzielbare, relative Luftvorwärmung beträgt bis zu 90%, d.h. bei einer Abgaseintrittstemperatur von bspw. 1000°C kann die Verbrennungsluft auf ca. 900°C vorgewärmt werden.

Wegen der hohen Luftvorwärmung arbeiten Industriebrenner mit integrierten Regeneratoren mit einem sehr guten Wirkungsgrad: sie erfordern aber in der Regel Maßnahmen zur NOₓ -Minderung. Ein Beispiel für einen solchen Regeneratorbrenner ist in der EP 0 685 683 A3 des Anmelders beschrieben.

Bei diesen Regeneratorbrenner ist in einem die Brennstofflanze koaxial umgebenden Ringraum ein einziger koaxial durchströmter Regenerator vorgesehen, dessen Wärmespeicherelemente aus einzelnen, aufeinander gestapelten, keramischen Regeneratorscheiben bestehen. Dem Regenerator ist eine keramische Brennkammer nachgeschaltet, die über eine im Querschnitt etwa kleeblattförmig gestaltete Düse in die Ofenkammer mündet und in der Gas und Luft bis zum Erreichen der Zünd-Temperatur im Ofenraum (ca. 800°C) verbrannt werden. Danach wird die Gaszufuhr für die Verbrennung im Ofenraum umgeschaltet. Da der Regeneratorbrenner nur mit einem Regenerator ausgerüstet ist, wird er anschliessend absatzweise in zwei Betriebszyklen betrieben. Während eines ersten Betriebszyklus wird sein Regenerator bei abgesperrter Brennstoff- und Verbrennungsluftzufuhr von heißen Ofenabgasen durchströmt, die die Wärmespeicherelemente des Regenerators aufheizen. Sowie der Regenerator aufgeheizt ist wird durch entsprechende Umschaltung von Abgas- und Verbrennungsluftventilen der zweite Betriebszyklus eingeleitet, in dem die Wärmespeicherscheiben des Regenerators im umgekehrten Sinn von der Verbrennungsluft durchströmt werden und damit die Verbrennungsluft vor ihrem Eintritt in die Brennkammer und von da in den Ofenraum vorwärmen. Wegen dieses zyklischen Betriebes sind in der Praxis mindestens zwei Regeneratorbrenner dieser Art erforderlich, die paarweise betrieben, abwechselnd mit Verbrennungsluft und Ofenabgas beaufschlagt werden. In vielen Fällen stört die Anordnung von zwei Brennern nicht, z. B. bei direkter Beheizung oder bei Strahlrohren mit zwei Schenkeln, wie sie ebenfalls in dieser Druckschrift erläutert sind. Eine ähnliche Anordnung mit zwei Generatorbrennern, deren Regeneratoren allerdings außerhalb der Ofenwand liegen, ist aus der EP 0 293 168 A2 bekannt.

Bei einem anderen, in der EP 0 463 218 A3 des Anmelders geoffenbarten Regeneratorbrenner ist die Anordnung derart getroffen, dass rings um einen die Brennstofflanze mit radialem Abstand umschliessenden, koaxialen Luftleitzylinder 6 Regeneratorpatronen angeordnet sind, die in der den Brenner aufnehmenden Öffnung der Ofenwand liegen. Jede der Regeneratorpatronen besteht aus einer Anzahl strömungsmäßig hintereinander angeordneter, übereinander gestapelter keramischer Speichersteine, die durchgehende Strömungskanäle enthalten. Die Regeneratorpatronen sind jeweils mit einem die Speichersteine aufnehmenden, rohrförmig gestalteten Außenmantel aus Stahlblech versehen, an dem sich auf der dem Ofenraum zugewandten Seite eine Düsenkammer anschliesst, in deren Bodenwand jeweils zwei Düsen angeordnet sind. Alle Düsen der Regeneratorpatronen liegen auf einem zu der Brennstofflanze koaxialen gedachten Kreis, wobei benachbarte Düsen einen gleichen Achsabstand aufweisen. Die Düsenkammern der Regeneratorpatronen umschliessen eine an den Luftleitzylinder angeschlossene keramische Brennkammer, in die die Brennstofflanze mündet. Die Brennkammer erlaubt es im Ofenraum die notwendige Zünd-Temperatur von ca. 800°C zu erzielen. Die Regeneratorpatronen werden gruppenweise in einem von zwei Betriebszyklen betrieben, von denen in dem einen sie von den heißen Verbrennungsabgasen durchströmt und aufgeheizt werden, während sie in dem anderen die gespeicherte Wärme an die sie durchströmende, kalte Verbrennungsluft abgeben. Zwischen den zylindrischen Regeneratorpatronen verbleibt ein beträchtliches, ungenutztes Zwickelvolumen, so dass das Wärmespeichervermögen der Regeneratoren begrenzt ist.

Grundsätzlich Ähnliches gilt schliesslich noch für einen aus der EP 0 715 123 A2 bekannten Regeneratorbrenner, bei dem die beiden innerhalb eines zu der zentralen Brennstofflanze koaxialen Rohres angeordneten Regeneratoren in einer Ausführungsform von einer Anzahl mit ihren Achsen auf einem gemeinsamen gedachten Kreis liegender Regeneratorpatronen gebildet und in einer anderen Ausführungsform in einem zu der Brennstofflanze koaxialen Ringraum angeordnet sind, der durch radiale Trennwände abgeteilt ist. Die sektorförmigen Abteilungen enthalten die bspw. als keramische Wabensteine vorliegenden, übereinander gestapelten Wärmespeicherelemente. Die abwechselnde Beaufschlagung der beiden so gebildeten Regeneratoren mit heißen Verbrennungsabgasen oder kalter Verbrennungsluft erfolgt durch eine Ventileinrichtung, die zwei gegeneinander verdrehbare Lochscheiben aufweist. Während für die Ausführungsform mit den kranzförmig angeordneten Regeneratorpatronen das oben bezüglich des Zwickelvolumens Gesagte gilt, ist die zweite Ausführungsform in der Herstellung kompliziert, wenn das die Wärmespeicherelemente aufnehmende zylindrische Rohr und die in dieses eingesetzten radialen Trennwände aus Keramikmaterial hergestellt werden sollen. U.a. treten Abdichtungsprobleme auf.

Ausgehend von diesem Stand der Technik liegt der Erfindung die Aufgabe zugrunde, einen Industriebrenner mit regenerativer Luftvorwärmung, d.h. einen sogenannten Regeneratorbrenner zu schaffen, der sich bei einfachem Aufbau mit innerhalb eines zylindrischen, äußeren Rohres angeordneten Regeneratoren durch ein hohes Wärmespeichervermögen auszeichnet und aufgrund seiner Konstruktion auch dazu geeignet ist, mit geringer NOₓ -Emmission betrieben werden zu können.

Zur Lösung dieser Aufgabe ist der Generatorbrenner erfindungsgemäß durch die Merkmale des Patentanspruch 1 gekennzeichnet.

Bei dem neuen Generatorbrenner sind die beiden Regeneratoren konzentrisch in zwei die Brennstoffzuführmittel umgebenden Ringräumen angeordnet, die zumindest über einen Teil ihrer axialen Länge radial ineinanderliegend in einem sie umgebenden äußeren, zylindrischen Rohr angeordnet sind. Die Verbrennungsluft und das Verbrennungsabgas werden, wie üblich, periodisch auf die beiden Regeneratoren umgeschaltet. Das Umschaltventil zur periodischen Umsteuerung von Verbrennungsluft und Verbrennungsabgas befindet sich in der Regel direkt am Brennerkopf.

An dem dem Brennerkopf gegenüberliegenden Ende sind den beiden die Regeneratoren aufnehmenden Ringräumen Düsenmittel zugeordnet, die abwechselnd als Ein- und Auslassdüsen betreibbar sind. Diese weisen eine Anzahl ringförmig verteilt angeordneter Düsenöffnungen auf, die mit ihren Mittelachsen, zumindest annähernd, auf einem zu dem Brennstoffzuführmitteln konzentrischen, gedachten Kreis liegen und die, gegebenenfalls gruppenweise, mit den Wärmespeicherelementen des einen oder des anderen Regenerators in Verbindung stehen. Sie können in einer bevorzugten Ausführungsform durch einen im Wesentlichen mäanderförmig geformten Düsenring begrenzt sein, der mit einem koaxialen Rohr wenigstens eines der beiden Regeneratoren verbunden ist.

Zwischen den Düsenmitteln und wenigstens dem radial innenliegenden Regenerator ist zweckmäßigerwese eine Brennkammer angeordnet, in die eine Brennstoffzufuhreinrichtung, insbesondere für den Startbetrieb führt. Im Aufheizbetrieb, unter etwa 800°C, wird das Verbrennungsgas der Brennkammer zugeführt, während der zugehörige Regenerator mit Verbrennungsluft beaufschlagt wird. Das bedeutet zwar eine Halbierung der Leistung in der Zeit während der die Ofenkammer auf Betriebstemperatur gebracht wird. In der Praxis ist dies jedoch in vielen Fällen zulässig. Erforderlichenfalls kann aber auch der äußere Regenerator mit einer Ringbrennkammer und eigener Verbrennungsgaszufuhr ausgestattet werden, womit erreicht wird, dass während der Aufheizphase die volle Leistung zur Verfügung steht. Allerdings wird damit auch eine zweite Zünd- und Überwachungseinrichtung notwendig, was einen gewissen Aufwand bedeutet.

Ein wesentlicher weiterer Vorteil der konzentrischen Anordnung der beiden Regeneratoren besteht in der Möglichkeit die die keramischen Wärmespeicherelemte aufnehmenden Rohre, die Brennkammer, die Düsenmittel und andere hohen Temperaturen ausgesetzte Teile aus hochtemperaturfestem, dünnwandigem Keramikmaterial (Schlickerguss) herzustellen. Enthalten die Düsenmittel den oben erwähnten, im Wesentlichen mäanderförmig geformten Düsenring, so kann dieser in einfacher Weise aus dünnwandigem Keramikmaterial hergestellt und einfach durch Einstecken in das zugeordnete koaxiale Rohr montiert werden, wobei in ihn ein die Düsenöffnungen radial nach innen zu begrenzendes Deckelteil eingesetzt werden kann. Durch die abwechselnde und symmetrische Anordnung der Ein-/Auslass-Düsenöffnungen beider Regeneratoren zum Ofenraum hin auf einem Kreisring um die zentralen Brennstoffzuführmittel (bspw. Gaslanze) wird eine gute Rezirkulation der Verbrennungsgase im Ofenraum bzw. in einem Strahlrohr erreicht.

Der neue Generatorbrenner ist insbesondere zur Verwendung mit einem endseitig verschlossenen einschenkeligen Mantelrohr, einem sogenannten Mantelstrahlheizrohr geeignet. Er kann aber auch zur Direktbeheizung eines Ofenraumes eingesetzt werden. In diesem Falle ist die Anordnung derart getroffen, das bei in eine entsprechende Öffnung der Wand des Ofenraumes eingesetztem Regeneratorbrenner die im Bereiche der innenliegende Wandseite befindlichen Düsenmittel frei in den Ofenraum mündend.

Die beiden Regeneratoren des neuen Regeneratorbrenners enthalten mit Vorteil ringförmige Wärmespeicherelemente, die axial durchströmbare Kanäle enthalten. Um einen unkontrollierten Bruch durch unterschiedliche Wärmedehnung, etc. zu vermeiden, ist es zweckmäßig, wenn die ringförmigen Wärmespeicherelemente in sektorförmige Ringsegmente aufgeteilt sind, die nebeneinander liegend angeordnet sind.

Andere Weiterbildungen des neuen Generatorbrenners sind Gegenstand von Unteransprüchen.

In der Zeichnung ist ein Ausführungsbeispiel des Gegenstandes der Erfindung dargestellt. Es zeigen:
- Figur 1: einen Generatorbrenner, gemäß der Erfindung im axialen Schnitt, längs der Linie I-I der Figur 3 in einer Seitenansicht und in schematischer Darstellung,
- Figur 2: den Regeneratorbrenner nach Figur 1, geschnitten längs der Linie II-II der Figur 1, in einer Draufsicht und
- Figur 3: den Regeneratorbrenner nach Figur 1, geschnitten längs der Linie III-III der Figur 1 in einer Draufsicht.

Der in der Zeichnung dargestellte Regeneratorbrenner dient zur Beheizung eines Ofenraumes 1, der durch eine im Ausschnitt dargestellte Ofenwand 2 begrenzt ist, die eine durchgehende zylindrische öffnung 3 aufweist. In die Öffnung 3 ist ein keramisches Mantelstrahlheizrohr 4 abgedichtet eingesetzt, das an seinem in den Ofenraum 1 ragenden Teil endseitig bei 5 verschlossen ist und das über angeformte Ringflansche 6 und Zwischenlagen 7 gegen die Außenseite der Ofenwand 2 abgestützt ist.

Auf das Mantelstrahlheizrohr 4 ist auf der Außenseite der Ofenwand 2 ein koaxialer Brennerkopf 8 aufgesetzt, dessen Stahlgehäuse 9 innen mit wärmedämmenden Material 10 ausgekleidet ist. Auf dem Brennerkopf sitzt ein Brennstoffverteiler 11 von dem eine in das Mantelstrahlheizrohr 4 ragende und zu diesem koaxiale Brennstofflanze 12 abgeht, die Brennstoffzuführmittel bildet und der über ein bei 13 angedeutetes Ventil Brennstoff, in der Regel Erdgas oder dergleichen, zugeführt werden kann. Die Brennstofflanze 12 mit radialem Abstand umgebend, geht von dem Brennstoffverteiler 11, ein Brennstoffzufuhrrohr 14 ab, dass kürzer als die Brennstofflanze 12 ist und über ein Ventil 15 ebenfalls mit Brennstoff (Erdgas oder dergleichen) beaufschlagt werden kann.

Das Brennstoffzufuhrrohr 14 ist von einem aus dünnwandigem Keramikmaterial bestehenden zylindrischen Innenrohr 16 im radialen Abstand umgeben, welches einenends abgedichtet in den Brennerkopf 8 innen eingesetzt ist. Das Innenrohr 16 ist gegen das Brennstoffzufuhrrohr 14 durch schlecht wärmeleitendes, hochtemperaturfestes, keramisches Material wärmeisoliert, wie das bei 17 angedeutet ist.

Das Innenrohr 16 ist in größerem radialem Abstand von einem koaxialen, aus dünnwandigem Keramikmaterial bestehenden zweiten Rohr 18 umgeben, das bei 19 endseitig an einem Ringflansch 20 befestigt ist, über den es an dem Brennerkopf 8 gehaltert ist. Koaxial zu dem zweiten Keramikrohr 18 ist ein ebenfalls aus dünnwandigem Keramikmaterial bestehendes äußeres, zylindrisches Rohr 21 vorgesehen, das endseitig mit einem Ringflansch 22 verbunden und über diesen an dem Brennerkopf 8 gehaltert ist.

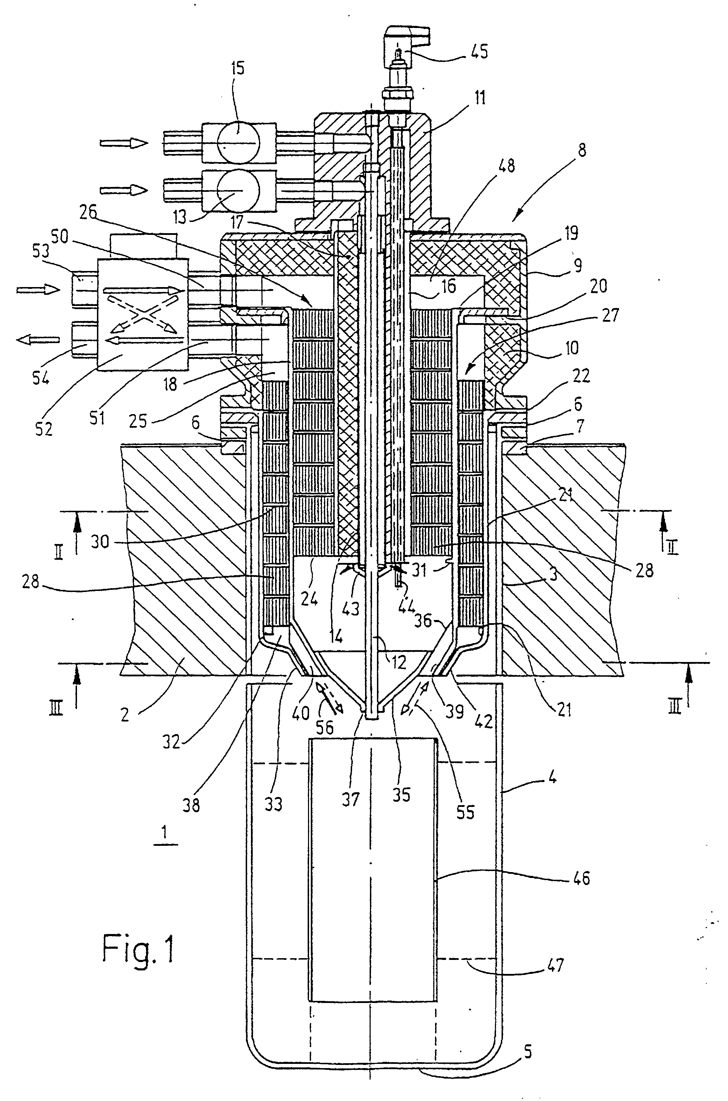

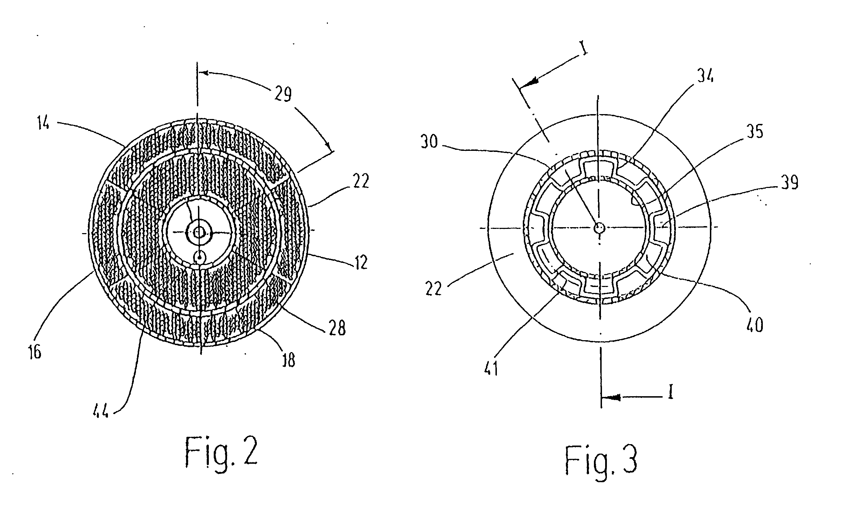

Zwischen dem inneren Rohr 16, dem dazu koaxialen zweiten Rohr 18 und dem äußeren Rohr 21, das, wie aus Figur 1 zu ersehen, im radialen Abstand von dem Mantelstrahlheizrohr 4 verläuft, sind zwei konzentrische Ringräume 24, 25 begrenzt, die zu der Brennstofflanze 12 koaxial, radial ineinanderliegend ausgebildet sind. In den Ringräumen 24, 25 sind zwei Regeneratoren 26, 27 angeordnet, von denen jeder ringförmige Wärmespeicherelement 28 enthält, die aus Keramikmaterial bestehen und deren Aufbau, insbesondere auch aus Figur 2 zu ersehen ist.

Die ringförmigen Wärmespeicherelemente 28 weisen axial durchgehende Kanäle von ca. 2 mm lichter Weite auf. Sie sind in sektorförmige Ringsegemente 29 unterteilt, die in Umfangsrichtung stumpf aneinanderstoßend angeordnet sind. Dadurch wird ein unkontrollierter Bruch, herrührend von thermisch bedingten Spannungen, vermieden. In Achsrichtung sind die ringförmigen Wärmespeicherelemente 28 durch kleine Zwischenräume 30 voneinander getrennt, die durch nicht weiter dargestellte Abstandsstücke bestimmt sind. Außerdem sind die Wärmespeicherelemente 28 jeweils auf einer Randleiste des zweiten Rohres 18 bzw. des äußeren Rohres 22 abgestützt, wie dies in Figur 1 bei 31 bzw. 32 dargestellt ist. Die Figur zeigt außerdem, dass die beiden Regeneratoren 26, 27 über einen beträchtlichen Teil ihrer axialen Länge einander überlappend innerhalb der Ofenwand 2 liegen, wobei der radiale außenliegende Regenerator 27 fast über seine gesamte axiale Länge in dem äußeren Rohr 22 aufgenommen ist, während der radial innenliegende Regenerator 26 sich etwa zur Hälfte in den Innenraum des Brennerkopfes 8 erstreckt.

Das äußere Rohr 21 ist auf der dem Ofenraum 1 zugewandten Stirnseite bei 33 trichterförmig nach innen zu eingezogen, so dass es eine zu dem Ofenraum 1 hin sich verjüngende Kegelmantelfläche aufweist. Auf den trichterförmig eingezogenen Bereich 33 des äußeren Rohres 22 ist innen ein Düsenring 34 (Figur 1, 3) aufgesetzt, der im Wesentlichen mäanderförmig gefaltet und an seiner Außenumfangsfläche entsprechend der Schräge der Innenwand des trichterförmig eingezogenen Bereiches 33, gestaltet ist. Der Düsenring 34 ragt in Achsrichtung bis an das zweite Rohr 18 heran, an das er sich innen anlegt, wie dies aus Figur 1 zu ersehen ist. In den Düsenring 34 ist ein topfoder kappenförmiger Abschlussdeckel 35 eingesetzt, der auf der keglig ausgebildeten Innenwand 36 des Düsenringes 34 mit einem einen entsprechenden Kegelwinkel aufweisenden Umfangsbereich abgestützt ist und der in Achsrichtung über den Düsenring 34 in den Ofenraum 1 vorragt. De Deckel 35 weist eine mittige Öffnung 37 auf, durch die die Brennstofflanze 12 durchgeführt ist.

In Achsrichtung der Brennstofflanze 12 erstreckt sich der Deckel 35 lediglich ca. über die halbe axiale Höhe des Düsenringes 34, etwa bis zu einem unterhalb der Wärmespeicherelemente 28 des radialen äußeren Regenerators 27 liegenden, von den Rohren 18, 22 begrenzten Ringraums 38. Durch den außen durch den trichterförmig eingezogenen Bereich 33 des äußeren Rohres 21 und innen durch den Deckel 35 begrenzten Bereich des in der geschilderten Weise eingesetzten Düsenringes 34, sind in dem mäanderförmig gefalteten Düsenring 34 nebeneinanderliegende, kanalartige Düsenöffnungen 39, 40 begrenzt, die im Querschnitt etwa trapezförmig sind und mit ihren Mittelpunkten auf einem gedachten, zu der Brennstofflanze 12 koaxialen Kreis liegen, der in Figur 3 bei 41 angedeutet ist. Die mit ihren Achsen schräg, radial nach innen, zu dem Ofenraum 1 hin gerichteten Düsenöffnungen 39, 40 sind somit symmetrisch und gleichmäßig verteilt rings um die Brennstofflanze 12 angeordnet. Die Düsenöffungen 39 münden in den Ringraum 38 des radial außenliegenden Regenerators 27 während die daneben liegenden Düsenöffnungen 40 in eine zu der Brennstofflanze 12 koaxiale Brennkammer 42 führen, die von dem Rohr 18, dem Düsenring 34 und dem Deckel 35 begrenzt ist. In der Brennkammer 42 mündet, in dem Bereich unmittelbar unter dem radial innenliegenden Regenerator 26 das Brennstoffzufuhrrohr 14, das zusammen mit einer auf der Brennstofflanze 12 angeordneten Prallscheibe 43, einen düsenartigen Brennstoffauslass begrenzt. Seitlich der durch die Brennkammer 42 hindurchgeführten Brennstofflanze 12 liegend, führt in die Brennkammer 42 eine Zündelektrode 44 mit zugeordneter Ionisationsüberwachung, deren zugeordnete elektrische Anschlußeinrichtung auf dem Brennstoffverteiler 11 sitzt und mit 45 bezeichnet ist.

Im axialen Abstand von der Mündung der Brennstofflanze 12 und dem Deckel 35 ist in dem Mantelstrahlheizrohr 4 ein koaxiales keramisches Flammrohr 46 angeordnet, das durch dünne Stege, wie sie bei 47 angedeutet sind, ortsfest gehalten ist.

In dem Brennerkopf 8 sind zwei durch den Ringflansch 20 axial voneinander getrennte Ringräume 48, 25 ausgebildet, von denen der Ringraum 48 mit dem radial innenliegenden Regenerator 26 und der Ringraum 25 mit dem radial außenliegenden Regenerator 27 in Verbindung stehen. In die Ringräume 48, 25 münden Ein-/Auslass-Kanäle 50, 51, die über eine Umschaltventileinrichtung 52 wahlweise mit einem Verbrennungsluftzufuhrkanal 53 oder mit einem Verbrennungsabgaskanal 54 verbunden werden können.

Der beschriebene Regneratorbrenner arbeitet grundsätzlich in der in der EP 0 463 218 A3 bzw. der EP 0 685 683 A3 des Anmelders beschriebenen Weise:

Ausgehend vom kalten Ruhezustand wird zunächst im Startbetrieb der Ofenkammer 42 über das Brennstoffzufuhrrohr 14 und den radial innenliegenden Regenerator 26 Brennstoff und Verbrennungsluft zugeführt. Das Luft/Brennstoffgemisch wird durch die Zündelektrode 44 gezündet und verbrannt. Die heissen Verbrennungsabgase treten durch die Düsenöffnungen 39 in das Mantelstrahlheizrohr 4 ein, überstreichen dessen Innenwandung und werden über die Düsenöffnungen 40, den Ringraum 38, den radial außenliegenden Regenerator 26 und die Verbrennungsgasableitung 54 abgeführt. Sowie in dem Mantelstrahlheizrohr 4 die Zündtemperatur (ca. 800°C ) erreicht ist, wird die Brennstoffzufuhr über das Brennstoffzufuhrrohr 14 abgesperrt und auf die außerhalb der Brennkammer 42 mündende Brennstofflanze 12 ungeschaltet (Ventile 13/15). Der aus der Brennstofflanze 12 austretende Brennstoff (in der Regel Gas) wird in dem Flammrohr 46 und in dem zwischen diesen und dem als Luftleitkegel für die aus den Düsenöffnungen 39 austretenden Luftstrahlen wirkenden Deckel 35 liegenden Bereich oxidiert, wobei gleichzeitig eine intensive Durchmischung mit den durch die Impulswirkung der aus den Düsenöffnungen 39 autretenden, intensiv umgewälzten heissen Abgasen erfolgt. Die durch die Wärmeabgabe über das Mantelstrahlheizrohr 4 in den Ofenraum 1 abgekühlten Abgase strömen über die als Auslassdüsen wirkenden Düsenöffnungen 40, durch den radial außen liegenden Regenerator 27 und die Verbrennungsgasabgasleitung 54 ab, wobei die keramischen Wärmespeicherelemente 28 dieses Regenerators aufgeheizt werden.

Sobald der Regenerator 27 voll aufgeheizt ist, schaltet die Ventileinrichtung 52 um, mit der Folge, dass die Verbrennungsluft nunmehr den heissen Regenerator 27 durchströmt und vorgewärmt wird, während die heissen Verbrennungsgase über die jetzt als Einlassdüsen wirkenden Düsenöffnungen 39 und die Brennkammer 42 den radial innenliegenden Regenerator 26 durchströmen und dessen keramische Wärmespeicherelemente 28 aufheizen.

Die Düsenöffnungen 39, 40 des Düsenringes 34 arbeiten somit taktweise als Ein- und Auslassdüsen, wie dies in Figur 1 durch Pfeile angedeutet ist, von denen die Pfeile 55 die wechselweise Durchströmung der Düsenöffnungen 39 und die Pfeile 56 die wechselweise Durchströmung der Düsenöffnungen 40 veranschaulichen.

Der in Figur 1 dargestellte Generatorbrenner arbeitet mit einem endseitig verschlossenen Mantelstrahlheizrohr 4, das ebenso wie das Flammrohr 46 und die Rohre 16, 18, 22 sowie der Düsenring 34 und der Deckel 35 aus einem dünnwandigen Keramikmaterial mit einer Wandstärke von in der Regel 2 bis 5 mm bestehen. Grundsätzlich kann der Generatorbrenner aber auch zum direkten Beheizen des Ofenraums 1 eingesetzt werden, wobei das Mantelstrahlheizrohr 4 dann entfällt. Ansonsten bleibt die Anordnung grundsätzlich so, wie in Figur 1 dargestellt.

In dem erläuterten Startbetrieb, in dem über das Brennstoffzufuhrrohr 14 Brennstoff in die Brennkammer 42 eingebracht und diese lediglich über den radial innenliegenden Regenerator 26 mit Verbrennungsluft beaufschlagt wird, arbeitet der Regeneratorbrenner bei der dargestellten Ausführungsform nur mit halber Leistung. Dies ist in der Regel kein Nachteil.

Falls erforderlich, kann aber auch der radial außenliegende Regenerator 27 während des Startbetriebes eingesetzt werden. Zu diesem Zwecke wird dann der Ringraum 38 als Ringbrennkammer benutzt, wozu sie mit einer (nicht weiter dargestellten) Brennstoffzufuhreinrichtung und einer Zündeinrichtung ausgestattet wird.

## Patentansprüche

1. Regeneratorbrenner, insbesondere zur Beheizung von Ofenräumen von Industrieöfen, mit
einem äußeren Rohr (21), in dem koaxiale, zentrale Brennstoffzufuhrmittel (12) angeordnet sind,
mit einem Brennerkopf (8), der Verbrennungsluftzuführ - und Verbrennungsabgasabführeinrichtungen (25, 48, 51, 50) enthält und von dem das äußere Rohr (21) abgeht,
mit zwei wechselweise jeweils mit Verbrennungsluft und mit Verbrennungsabgasen beaufschlagba-Regeneratoren (26, 27), wobei
die beiden Regeneratoren (26, 27) in zwei zu den Brennstoffzuführmitteln (12) koaxialen Ringräumen (24, 25) angeordnet sind, die die Brennstoffzuführmittel umgebend zumindest über einen Teil ihrer axialen Länge in dem äußeren Rohr (21) sich erstreckend, radial ineinanderliegend ausgebildet sind, und
mit an dem dem Brennerkopf (8) gegenüberliegenden Ende den beiden Ringräumen (24, 25) zugeordneten, abwechselnd als Ein- und Auslassdüsen betreibbaren Düsenmitteln (34; 39, 40).

2. Regeneratorbrenner nach Anspruch 1, **dadurch gekennzeichnet, dass** jede der beiden Regeneratoren (26, 27) ringförmige Wärmespeicherelemente (28) enthält, die axial durchströmbare Kanäle enthalten.

3. Regeneratorbrenner nach Anspruch 2, **dadurch gekennzeichnet, dass** die ringförmigen Wärmespeicherelemente (28) in sektorförmige Ringsegmente (29) aufgeteilt sind.

4. Regeneratorbrenner nach einem der vorhergehenden Ansprüche, **dadurch gekennzeichnet, dass** bei in eine entsprechende Öffnung (3) einer Wand (2) eines Ofenraumes (1) eingesetztem Regeneratorbrenner die Regeneratoren (26, 27), zumindest teilweise im Bereiche der Ofenwand (2) angeordnet sind.

5. Regeneratorbrenner nach einem der vorhergehenden Ansprüche, **dadurch gekennzeichnet, dass** die Düsenmittel eine Anzahl ringförmig verteilt angeordneter Düsenöffnungen (39, 40) aufweisen, die mit ihren Mittelachsen, zumindest annähernd auf einem zu den Brennstoffzuführmitteln (12) konzentrischen, gedachten Kreis (41) liegen und die abwechselnd, - gegebenenfalls gruppenweise - mit den Wärmespeicherelementen (28) des einen oder des anderen Regenerators (26, 27) in Verbindung stehen.

6. Regeneratorbrenner nach Anspruch 5, **dadurch gekennzeichnet, dass** die Düsenöffnungen (39, 40) durch einen im Wesentlichen mäanderförmig geformten Düsenring (34) begrenzt sind, der mit einem koaxialen Rohr (21) wenigstens eines der beiden Regeneratoren (26, 27) verbunden ist.

7. Regeneratorbrenner nach Anspruch 6, **dadurch gekennzeichnet, dass** in den Düsenring (34) ein die Düsenöffnungen radial nach innen zu begrenzendes Deckelteil (35) eingesetzt ist.

8. Regeneratorbrenner nach einem der vorhergehenden Ansprüche, **dadurch gekennzeichnet, dass** zwischen den Düsenmitteln (34; 39, 40) und wenigstens dem radial innenliegenden Regenerator (26) eine Brennkammer (42) angeordnet ist, in die eine Brennstoffzufuhreinrichtung (14), insbesondere für den Startbetrieb führt.

9. Regeneratorbrenner nach einem der vorhergehenden Ansprüche, **dadurch gekennzeichnet, dass** wenigstens die Düsenmittel (34) und die keramischen Speicherelemente (28) der Regeneratoren (26, 27) aufnehmende Rohre (16, 18, 21) aus dünnwandigem Keramikmaterial bestehen.

10. Regeneratorbrenner nach einem der vorhergehenden Ansprüche **dadurch gekennzeichnet, dass** bei in eine entsprechende Öffnung (3) einer Wand (2) eines Ofenraumes (1) eingesetztem Regeneratorbrenner, die im Bereiche der innenliegenden Wandseite befindlichen Düsenmittel (34; 39, 40) frei in den Ofenraum (1) mündend angeordnet sind.

11. Regeneratorbrenner nach einem der Ansprüche 1 bis 7, **dadurch gekennzeichnet, dass** er ein endseitig verschlossenes Mantelstrahlheizrohr (4) aufweist, in das die Düsenmittel (34; 39, 40) münden.

12. Regeneratorbrenner nach Anspruch 11, **dadurch gekennzeichnet, dass** das Mantelstrahlheizrohr (4) aus einem dünnwandigen Keramikmaterial besteht.

## Claims

1. Regenerator burner, in particular for heating furnace chambers of industrial furnaces, having
an outer tube (21) with coaxial central fuel feed means (12) arranged therein,
a gas port end (8) which comprises combustion air supply and combustion gas exhaust means (25, 48, 51, 50) and from which the outer tube (21) departs,
two regenerators (26, 27) that can be alternately supplied with combustion air and combustion exhaust gases, respectively,
the two regenerators (26, 27) being arranged in two annular chambers (24, 25), which are coaxially arranged with respect to the fuel feed means (12) and which, enclosing the latter and extending at least over part of their axial length in the outer tube, are arranged radially one inside the other, and
having further, at the end opposite the gas port end (8), nozzle means (34; 39, 40) that are associated to the two annular chambers (24, 25) and can be operated alternately as inlet and outlet nozzles, respectively.

2. The regenerator burner as defined in Claim 1, **characterised in that** each of the two regenerators (26, 27) comprises annual heat accumulator elements (28) through which a flow can pass in axial direction.

3. The regenerator burner as defined in Claim 2, **characterised in that** the annular heat accumulator elements (28) are subdivided into sector-shaped annular segments (29).

4. The regenerator burner as defined in any of the preceding claims, **characterised in that** when the regenerator burner is fitted in a corresponding opening (3) of a wall (2) of a furnace chamber (1), the regenerators (26, 27) are located, at least partially, in the region of the furnace wall (2).

5. The regenerator burner as defined in any of the preceding claims, **characterised in that** the nozzle means comprise a number of nozzle openings (39, 40) distributed in an annular pattern, the centre axes of which lie at least approximately on an imaginary circle (41) drawn concentrically relative to the fuel feed means (12) and which are connected alternately - in groups, if desired - with the heat accumulator elements (28) of the one or the other regenerator (26, 27).

6. The regenerator burner as defined in Claim 5, **characterised in that** the nozzle openings (39, 40) are defined by a substantially meander-shaped nozzle ring (34) connected with a coaxial tube (21) of at least one of the two regenerators (26, 27).

7. The regenerator burner as defined in Claim 6, **characterised in that** a cover element (35) delimiting the nozzle openings radially toward the inside is fitted in the nozzle ring (34).

8. The regenerator burner as defined in any of the preceding claims, **characterised in that** a burner chamber (42) is arranged between the nozzle means (34; 39, 40) and at least the radially inner regenerator (26)m with fuel feed means (14), intended especially to support the starting operation, leading into that chamber.

9. The regenerator burner as defined in any of the preceding claims, **characterised in that** at least tubes (16, 18, 21) accommodating the nozzle means (34) and the ceramic accumulator elements (28) of the regenerators (26, 27) are made from a thin-walled ceramic material.

10. The regenerator burner as defined in any of the preceding claims, **characterised in that** when the regenerator burner is fitted in a corresponding opening (3) of a wall (2) of a furnace chamber (1), the nozzle means (34; 39, 40) present in the region of the inner wall surface are arranged to project freely into the furnace chamber (1).

11. The regenerator burner as defined in any of claims 1 to 7, **characterised in that** it comprises a jacket-type radiant tube (4), closed on its one end, into which open the nozzle means (34; 39, 40).

12. The regenerator burner as defined in Claim 11, **characterised in that** the jacket-type radiant tube (4) consists of a thin-walled ceramic material.

## Revendications

1. Brûleur à régénérateur, en particulier pour le chauffage d'enceintes de four, dans des fours industriels, comprenant
un tube extérieur (21) dans lequel sont disposés des moyens d'alimentation en combustible (12) coaxiaux, centraux,
une tête de brûleur (8), qui comporte des dispositifs d'entrée d'air de combustion et d'évacuation des gaz de combustion (25, 48, 51, 50), et de laquelle part le tube extérieur (21),
deux régénérateurs (26, 27) qui peuvent être alimentés alternativement avec de l'air de combustion et des gaz de combustion,
les deux régénérateurs (26, 27) étant disposés dans deux chambres annulaires (24, 25), coaxiales avec les moyens d'alimentation en combustible (12), qui s'étendent à l'intérieur du tube extérieur (21) en entourant les moyens d'alimentation en combustible au moins sur une partie de leur longueur axiale, et sont montés l'un dans l'autre dans la direction radiale, ainsi que
des moyens formant buses (34; 39, 40) associés aux deux chambres annulaires (24, 25), qui sont disposés à l'extrémité opposée à la tête de brûleur (8) et peuvent fonctionner alternativement en buse d'entrée et en buse de sortie.

2. Brûleur à régénérateur selon la revendication 1, **caractérisé en ce que** chacun des deux régénérateurs (26, 27) comporte des éléments accumulateurs de chaleur (28) annulaires, qui sont pourvus de canaux à circulation axiale.

3. Brûleur à régénérateur selon la revendication 2, **caractérisé en ce que** les éléments accumulateurs de chaleur (28) annulaires sont divisés en segments d'anneau (29) en forme de secteurs.

4. Brûleur à régénérateur selon une des revendications précédentes, **caractérisé en ce que**, lorsque le brûleur à régénérateur est monté dans une ouverture adaptée (3) dans une paroi (2) d'une enceinte de four (1), les régénérateurs (26, 27) sont disposés au moins partiellement dans la région de la paroi de four (2).

5. Brûleur à régénérateur selon une des revendications précédentes, **caractérisé en ce que** les moyens formant buses présentent un certain nombre d'orifices de buses (39, 40) répartis en anneau, dont les axes médians sont situés au moins approximativement sur un cercle imaginaire (41) concentrique avec les moyens d'alimentation en combustible (12), et qui alternativement - le cas échéant par groupes - communiquent avec les éléments accumulateurs de chaleur (28) de l'un ou de l'autre régénérateur (26, 27).

6. Brûleur à régénérateur selon la revendication 5, **caractérisé en ce que** les orifices de buses (39, 40) sont délimités par un anneau de buse (34) conformé essentiellement avec des ondulations, qui est lié à un tube (21) coaxial avec au moins un des deux régénérateurs (26, 27).

7. Brûleur à régénérateur selon la revendication 6, **caractérisé en ce qu'**un élément de fermeture (35), qui délimite les orifices de buse vers l'intérieur vu dans la direction radiale, est monté dans l'anneau de buse (34).

8. Brûleur à régénérateur selon une des revendications précédentes, **caractérisé en ce qu'**entre les moyens formant buses (34; 39, 40) et au moins le régénérateur (26) intérieur, vu dans la direction radiale, est disposée une chambre de combustion (42) dans laquelle débouche un dispositif d'alimentation en combustible (14), en particulier pour le démarrage.

9. Brûleur à régénérateur selon une des revendications précédentes, **caractérisé en ce que** des tubes (16, 18, 21), qui reçoivent au moins les moyens formant buses (34) et les éléments accumulateurs (28) des régénérateurs (26, 27), sont réalisés en un matériau céramique à paroi mince.

10. Brûleur à régénérateur selon une des revendications précédentes, **caractérisé en ce que** lorsque le brûleur à régénérateur est monté dans une ouverture adaptée (3) dans une paroi (2) d'une enceinte de four (1), les moyens formant buses (34; 39, 40) disposés dans le voisinage de la face intérieure de la paroi débouchent librement dans l'enceinte de four (1).

11. Brûleur à régénérateur selon une des revendications 1 à 7, **caractérisé en ce qu'**il comporte un tube de chauffage à rayonnement (4) fermé à une extrémité, dans lequel débouchent les moyens formant buses (34; 39, 40).

12. Brûleur à régénérateur selon la revendication 11, **caractérisé en ce que** le tube de chauffage à rayonnement (4) est réalisé en un matériau céramique à paroi mince.
